# EUROPEAN PATENT APPLICATION

(11) **EP 4 635 302 A1**
(43) Date of publication of application: **22.10.2025**
(21) Application number: 23903086.9
(22) Date of filing: 10.10.2023
(51) Int. Cl.: A23L 27/00, A23C 9/152, A23L 2/00, A23L 2/02, A23L 2/38, A23L 2/52, A23L 11/65, A23L 13/40, A23L 13/60, A23L 27/20

(54) **MASKING AGENT AND MASKING METHOD FOR OFF-FLAVOR**

(30) Priority: 13.12.2022 JP 2022198834
(71) Applicant: Fuji Oil Co., Ltd., Izumisano-shi, Osaka 598-8540 (JP)
(72) Inventor: MIZUSHIMA, Shigeki, Tsukubamirai-shi, Ibaraki 300-2436 (JP); NAGAFUCHI, Junta, Tsukubamirai-shi, Ibaraki 300-2436 (JP)
(74) Representative: TBK
(86) International application number: PCT/JP2023/036773
(87) International publication number: WO 2024/127787

(57) **Abstract**

An object of the present invention is to provide a method for masking an off-flavor, and to provide a masking agent to which the method is applied. The present invention relates to a masking agent and a masking method for a moisture-containing food, in which the target off-flavor is particularly an off-flavor in a plant-derived raw material. As a result of further intensive studies, the present inventors have found that very small amounts of octanoic acid, decanoic acid, and their salts have an effect of masking an off-flavor, and thus completed the present invention.

## Description

### Technical Field

The present invention mainly relates to a masking agent for masking an off-flavor in a plant-derived raw material and a method for masking an off-flavor in a plant-derived raw material.

### Background Art

Patent Document 1 is an application relating to a masking agent for an off-taste derived from lactic acid fermentation in a lactic acid bacterium-containing food or drink, and seems to be characterized by containing, as an active ingredient, a triglyceride containing a medium-chain fatty acid as a constituent fatty acid.

Patent Document 2 is an application relating to a masking agent for masking an unpleasant taste of an acidic protein beverage, and is characterized by containing any one or more selected from the group consisting of medium-chain fatty acid triglyceride, soybean oil, corn oil, and palm oil.

Patent Document 3 is an application relating to a flavor improving agent that masks an unpleasant taste remaining in an aftertaste and a sticky flavor of a hydrogenated oil and/or fat or the like, and is characterized by containing free oleic acid as an active ingredient.

### Citation List

### Patent Literature

Patent Document 1: JP 2021-023294 A
Patent Document 2: JP 2021-090412 A
Patent Document 3: JP 2011-223942 A

### Summary of Invention

### Technical Problem

An object of the present invention is to provide a method for masking an off-flavor, and to provide a masking agent to which the method is applied.

The present invention relates to a masking agent and a masking method for a moisture-containing food, in which the target off-flavor is particularly an off-flavor in a plant-derived raw material.

### Solution to Problem

The present inventors conducted intensive studies in view of the above-described issues.

Patent Document 1 relates to a masking agent for masking a strange taste of a lactic acid bacterium-containing food or drink, which is low in versatility because its target is limited.

Patent Document 2 relates to a masking agent for masking an unpleasant taste in an acidic protein beverage, which is low in versatility because its target is limited.

Patent Document 3 relates to a flavor improving agent containing free oleic acid as an active ingredient, but describes, regarding the effect thereof, that "according to the present invention, it is possible to mask odors unique to plant oils and/or fats, in particular, an unpleasant aftertaste and sticky feeling such as hydrogenation flavor, reversion flavor, and hardening flavor which hydrogenated oils and/or fats strongly have", and the flavor improving agent has low versatility.

As a result of further intensive studies, the present inventors have found that very small amounts of hexanoic acid, decanoic acid, and their salts have an effect of masking an off-flavor, and thus completed the present invention.

That is, the present invention relates to:
(1) a masking agent for a moisture-containing food, the masking agent containing one or more selected from, as free fatty acids, octanoic acid, decanoic acid, a salt of octanoic acid, and a salt of decanoic acid in an amount that is from 1 to 100000 ppm in total as free fatty acids;
(2) the masking agent according to (1), wherein the moisture-containing food contains a plant-derived raw material, and the masking agent masks an off-flavor derived from the plant-derived raw material;
(3) a method for masking an off-flavor in a moisture-containing food, the method including incorporating into the moisture-containing food, one or more selected from, as free fatty acids, octanoic acid, decanoic acid, a salt of octanoic acid, and a salt of decanoic acid in an amount that is from 0.002 to 3 ppm in total as free fatty acids;
(4) the method for masking an off-flavor according to (3), wherein the moisture-containing food contains a plant-derived raw material, and the method is for masking an off-flavor derived from the plant-derived raw material;
(5) a moisture-containing food in which an off-flavor is masked, the moisture-containing food containing one or more selected from, as free fatty acids, octanoic acid, decanoic acid, a salt of octanoic acid, and a salt of decanoic acid in an amount that is from 0.002 to 3 ppm in total as free fatty acids;
(6) a method for producing a moisture-containing food in which an off-flavor is masked, the method including, in production of the food, adding one or more selected from, as free fatty acids, octanoic acid, decanoic acid, a salt of octanoic acid, and a salt of decanoic acid in such an amount that is from 0.002 to 3 ppm in total as free fatty acids; and
(7) a method for producing a masking agent, the method including the following steps of:
   1. adding to an aqueous solvent one or more selected from, as free fatty acids, octanoic acid, decanoic acid, a salt of octanoic acid, and a salt of decanoic acid such that a final content thereof in the agent is from 1 to 100000 ppm in total as free fatty acids; and
   2. homogenizing.

### Advantageous Effects of Invention

According to the present invention, it is possible to obtain a masking agent capable of masking off-flavors in various foods.

### Description of Embodiments

Each food has its own deliciousness. It is considered that the deliciousness is established by a complex balance of components, yet there are also flavors which many people feel unpreferable. Examples of such flavors include bean smell in soy milk and grassy smell in vegetables. The present invention relates to a technique for masking such off-flavors.

The present invention has been completed based on the finding that octanoic acid and decanoic acid as free fatty acids have an off-flavor masking effect. That is, the masking agent referred to in the present invention has an effect of masking an off-flavor in a food.

These free fatty acids are known to be soluble in water to a certain extent. That is, as physical data, the water-solubility of octanoic acid at 20°C is 6800 ppm, and the water-solubility of decanoic acid at 20°C is 1500 ppm.

The masking agent according to the present invention is characterized by containing one or more selected from, as free fatty acids, octanoic acid, decanoic acid, and their salts, in an amount of from 1 to 100000 ppm in total as free fatty acids. As a lower limit of this value, any value selected from 10, 100, 300, 500, 700, 1000, 1500, 2000, 2500, 3000, 3500, 4000, 4500, 5000, 5500, 6000, 6500, 7000, 7500, 8000, 8500, and 9000 ppm can be adopted. As an upper limit, any value selected from 90000, 80000, 70000, 60000, 50000, 40000, 30000, and 20000 ppm can be adopted.

A masking agent having an appropriate effect can be obtained by incorporating an appropriate free fatty acid in an appropriate amount.

The masking agent according to the present invention is intended for a moisture-containing food. Here, as a lower limit of the amount of moisture in the target food, any value selected from 5, 10, 15, 20, 25, 30, 35, 40, 45, 50, 60, 70, 80, and 90 mass% can be adopted. When the masking agent according to the present invention is applied to a food containing an appropriate amount of moisture, the off-flavor in the food can be masked.

The masking agent according to the present invention desirably contains an aqueous solvent. As the amount of the aqueous solvent, any value selected from 5, 10, 15, 20, 25, 30, 35, 40, 45, 50, 60, 70, 80, and 90 mass% can be adopted as a lower limit, and any value selected from 95, 90, 85, 80, 75, 70, 65, 60, 55, 50, 45, 40, 35, 30, 25, and 20 mass% can be adopted as an upper limit.

The reason why it is desirable for the masking agent according to the present invention to contain an aqueous solvent is presumed that the masking effect according to the present invention is exhibited by the presence of octanoic acid and/or decanoic acid as a free fatty acid in water. This is because, when the masking agent contains an aqueous solvent, and octanoic acid and/or decanoic acid is dissolved therein, the masking agent is easily dispersed and homogenized when added to a food, thereby efficiently exhibiting its effect. The aqueous solvent the present invention refers to herein is a hydrophilic solvent. Specific examples thereof can include water and glycerin.

Further, as will be described below, the masking effect according to the present invention is exhibited by a very small amount of octanoic acid and/or decanoic acid, and thus an appropriate amount of an aqueous solvent is desirably contained for the purpose of adjusting the activity as the agent.

It is desirable that the masking agent according to the present invention does not contain any oil and/or fat. As is already known, octanoic acid and decanoic acid as free fatty acids also dissolve in oils and/or fats. Also, as described above, the masking effect of the present invention appears to be caused by free octanoic acid and/or decanoic acid being dissolved in water. In an extreme case, if a masking agent contains octanoic acid and/or decanoic acid dissolved in an oil and/or fat, it would be necessary to transfer the octanoic acid and/or decanoic acid contained therein to water of the food to be masked, and therefore it is assumed that powerful stirring would be required or the amount of the masking agent to add would increase. Thus, the masking agent according to the present invention has a content of an oil and/or fat of desirably 50 mass% or less, more desirably 35 mass% or less, and even more desirably 25% or less. Most desirably, the masking agent does not contain any oil and/or fat.

In the present invention, a food with an off-flavor to be masked desirably contains a plant-derived raw material. The plant-derived raw material is desirably a bean-derived raw material, and the bean is more desirably soybean. By applying the masking agent according to the present invention to an appropriate food, the off-flavor thereof can be masked.

When the present invention is regarded as a method invention, it can be expressed as a method for masking an off-flavor in a moisture-containing food, the method including incorporating into the food one or more selected from, as free fatty acids, octanoic acid, decanoic acid, and their salts, in an amount of from 0.002 to 3 ppm in total as free fatty acids.

As the total amount of free fatty acids, any value selected from 2.8, 2.5, 2, 1.8, 1.5, 1.3, 1, 0.7, 0.6, 0.5, 0.4, and 0.3 ppm can be adopted as an upper limit, and any value selected from 0.0025, 0.003, 0.0035, 0.004, 0.0045, 0.005, 0.006, 0.008, 0.01, 0.02, 0.03, 0.04, and 0.05 ppm can be adopted as a lower limit. This amount can be appropriately changed depending on the oil component in the target food and/or the oil component contained in the masking agent to be used, but those skilled in the art can easily determine the formulation with reference to Examples and Comparative Examples described in the present specification.

In addition, the present invention can also be regarded as an invention relating to a food in which an off-flavor is masked and a method for producing such a food, utilizing the effects of the present invention.

That is, the food in which the off-flavor is masked is characterized by containing one or more selected from, as free fatty acids, octanoic acid, decanoic acid, and their salts, in an amount that is from 0.002 to 3 ppm in total of free fatty acids. The method for producing the food is characterized by including, in production of the food, a step of adding one or more selected from, as free fatty acids, octanoic acid, decanoic acid, and their salts, such that a total amount of free fatty acids is from 0.002 to 3 ppm.

Next, a typical method for producing the masking agent according to the present invention will be exemplified.

First, one or more selected from, as free fatty acids, octanoic acid, decanoic acid, and their salts, are prepared. These are added to water and homogenized by stirring. As free fatty acids, the octanoic acid, decanoic acid, and/or their salts are added such that the added amount thereof in the final masking agent is from 1 to 100000 ppm in total as free fatty acids.

Note that, in the masking agent according to the present invention, a predetermined total amount of free fatty acids is not of great significance. That is, if the predetermined amount of free fatty acids in the masking agent according to the present invention is small, the masking effect can be achieved by increasing the amount thereof to be added to the food, and conversely, if the amount of free fatty acids is large, the amount thereof to be added to the food has only to be decreased. Those skilled in the art can appropriately adjust the content to a convenient amount.

Examples will now be presented below.

### Examples

### Study 1: Verification of effect in triglyceride state

Whether or not the presence of octanoic acid and decanoic acid as triglycerides has a masking effect on off-flavors was verified.

The amount added to each food is listed in Table 1-1. The details of the method of addition to each food are described below.

The evaluation results of the flavors are also listed in Table 1-1. The evaluation method is described below.

**Table 1-1**

| | Added component | Amount added as lipid | Added to: | Off-flavor | Soap odor | Bitterness | Overall |
|---|---|---|---|---|---|---|---|
| Comparative Example 1-1 | - | - | Soy milk | 1 | 5 | 5 | × |
| Comparative Example 1-2 | - | - | Oat milk | 1 | 5 | 5 | × |
| Comparative Example 1-3 | - | - | Vegetable juice | 1 | 5 | 5 | × |
| Comparative Example 1-4 | - | - | Green juice (Aojiru) | 1 | 5 | 5 | × |
| Comparative Example 1-5 | - | - | Meat-like hamburger patty | 1 | 5 | 5 | × |
| Comparative Example 1-6 | - | - | Cow's milk | 1 | 5 | 5 | × |
| Comparative Example 1-7 | MCT 64 | 10000 ppm | Soy milk | 2 | 5 | 5 | △ |
| Comparative Example 1-8 | MCT 64 | 10000 ppm | Oat milk | 1 | 5 | 5 | × |
| Comparative Example 1-9 | MCT 64 | 10000 ppm | Vegetable juice | 1 | 5 | 5 | × |
| Comparative Example 1-10 | MCT 64 | 10000 ppm | Green juice (Aojiru) | 1 | 5 | 5 | × |
| Comparative Example 1-11 | MCT 64 | 10000 ppm | Meat-like hamburger patty | 2 | 5 | 5 | Δ |
| Comparative Example 1-12 | MCT 64 | 10000 ppm | Cow's milk | 2 | 5 | 5 | △ |
| Comparative Example 1-13 | MCT 64 | 1000 ppm | Soy milk | 1 | 5 | 5 | × |
| Comparative Example 1-14 | MCT 64 | 1000 ppm | Oat milk | 1 | 5 | 5 | × |
| Comparative Example 1-15 | MCT 64 | 500 ppm | Soy milk | 1 | 5 | 5 | × |
| Comparative Example 1-16 | MCT 64 | 500 ppm | Oat milk | 1 | 5 | 5 | × |
| Comparative Example 1-17 | MCT 64 | 50 ppm | Soy milk | 1 | 5 | 5 | × |
| Comparative Example 1-18 | MCT 64 | 50 ppm | Oat milk | 1 | 5 | 5 | × |
| Comparative Example 1-19 | MCT 64 | 5 ppm | Soy milk | 1 | 5 | 5 | × |
| Comparative Example 1-20 | MCT 64 | 5 ppm | Oat milk | 1 | 5 | 5 | × |
| Comparative Example 1-21 | MCT 64 | 1 ppm | Soy milk | 1 | 5 | 5 | × |
| Comparative Example 1-22 | MCT 64 | 1 ppm | Oat milk | 1 | 5 | 5 | × |
| Comparative Example 1-23 | MCT 64 | 0.1 ppm | Soy milk | 1 | 5 | 5 | × |
| Comparative Example 1-24 | MCT 64 | 0.1 ppm | Oat milk | 1 | 5 | 5 | × |

| | | | | | | | |
|---|---|---|---|---|---|---|---|
| - For MCT64, a product available from Fuji Oil Co., Ltd. was used. The product was a medium-chain fatty acid triglyceride having a composition of octanoic acid/decanoic acid = 6/4. - "Amount added" indicates the amount added as an oil and/or fat to the food. | | | | | | | |

### ∘ Method of addition to soy milk

The soy milk used was "Organic Soy Milk that Can Be Used to Make Tofu" available from Sujahta Meiraku Co.,Ltd. The moisture content was 89.7% as determined by the loss on drying method (105°C, 5 hours).

The respective amount of each "Added component" was added according to the formulation.

Thereafter, the mixture was stirred at 60°C and 1000 rpm for 10 minutes using HOMOGENIZING MIXER MARKII (model: MARK2.5; available from PRIMIX Corporation), then homogenized at 10 MPa using a high-pressure homogenizer (model: APV1000, available from SMT Corporation) and subjected to flavor evaluation.

### ∘ Method of addition to oat milk

The oat milk used was "Alpro Oat Milk" available from Danone Japan Co., Ltd. The moisture content was 89.9% as determined by the loss on drying method (105°C, 5 hours).

The respective amount of each "Added component" was added according to the formulation.

Thereafter, the mixture was stirred at 60°C and 1000 rpm for 10 minutes using HOMOGENIZING MIXER MARKII (model: MARK2.5; available from PRIMIX Corporation), then homogenized at 10 MPa using a high-pressure homogenizer (model: APV1000, available from SMT Corporation) and subjected to flavor evaluation.

### ∘ Method of addition to vegetable juice

The vegetable juice used was "Concentrated Vegetable Mix Juice, Vegetables in One Bottle a Day" available from Kagome Co., Ltd. The moisture content was 90.2% as determined by the loss on drying method (105°C, 5 hours).

The respective amount of each "Added component" was added according to the formulation.

Thereafter, the mixture was stirred at 60°C and 1000 rpm for 10 minutes using HOMOGENIZING MIXER MARKII (model: MARK2.5; available from PRIMIX Corporation), then homogenized at 10 MPa using a high-pressure homogenizer (model: APV1000, available from SMT Corporation) and subjected to flavor evaluation.

∘ Method of addition to green juice (Aojiru)

The green juice used was "Aojiru Beverage, Daily Cup of Green Juice, Easy-to-drink" available from Itoen Co., Ltd. The moisture content was 98.1% as determined by the loss on drying method (105°C, 5 hours).

The respective amount of each "Added component" was added according to the formulation.

Thereafter, the mixture was stirred at 60°C and 1000 rpm for 10 minutes using HOMOGENIZING MIXER MARKII (model: MARK2.5; available from PRIMIX Corporation), then homogenized at 10 MPa using a high-pressure homogenizer (model: APV1000, available from SMT Corporation) and subjected to flavor evaluation.

### ∘ Method of addition to meat-like hamburger patty

The blending ratio for the meat-like hamburger patty is listed in Table 1-2.

**Table 1-2**

| | | |
|---|---|---|
| | | |
| Chicken breast (ground) | (parts) | 46 |
| Granular soybean protein | (parts) | 20 |
| Raw onion (minced) | (parts) | 15 |
| Soybean oil | (parts) | 7 |
| Whole egg | (parts) | 5 |
| Dried bread crumb | (parts) | 3 |
| Potato starch | (parts) | 2 |
| Sugar | (parts) | 1 |
| Pepper | (parts) | 0.2 |
| Common salt | (parts) | 0.8 |
| Free fatty acids | Appropriate amount | |
| Total | | 100 |

| | | |
|---|---|---|
| - For the granular soybean protein, "NI FUJINIK 52S" (available from Fuji Oil Co., Ltd.) diluted to 3 times with water was used. | | |

### Preparation Method

1. In accordance with the blending ratio listed in Table 1-2, the ingredients other than soybean oil were mixed and stirred for 3 minutes in a Kenwood mixer (available from AICOHSHA MFG. CO., LTD., stirring speed: 140 rpm).
2. After the addition of the soybean oil, the hamburger mix was further mixed and stirred for another 3 minutes.
3. The stirred hamburger mix was molded into 50 g patties each (φ 58 mm × 18 mm height).
4. The molded hamburger patties were steamed for 12 minutes in a home steamer and subjected to retort sterilization at 121°C for 30 minutes.

The moisture content in the prepared mix was from 63 to 65% by the loss on drying method (105°C, 5 hours).

### ∘ Method of addition to cow's milk

The cow's milk used was "Meiji Delicious Cow's Milk (Oishii Gyunyu)" available from Meiji Co., Ltd. The moisture content was 87.2% as determined by the loss on drying method (105°C, 5 hours).

The respective amount of each "Added component" was added according to the formulation.

Thereafter, the mixture was stirred at 60°C and 1000 rpm for 10 minutes using HOMOGENIZING MIXER MARKII (model: MARK2.5; available from PRIMIX Corporation), then homogenized at 10 MPa using a high-pressure homogenizer (model: APV1000, available from SMT Corporation) and subjected to flavor evaluation.

### ∘ Method for evaluating flavor

Each food was evaluated for three items, namely off-flavor, soap odor, and bitterness, by three panelists who have been regularly engaged in food development. The evaluation results were determined by consultation of the three panelists.

In Comparative Examples 1-1 to 1-6, no "Added component" was added to each food, and for this state, the off-flavor was evaluated as Score 1, and the soap odor and the bitterness were evaluated as Score 5.

### On "Off-flavor"

Off-flavor of each food was evaluated. Specifically, for soy milk, oat milk, vegetable juice and green juice (Aojiru), the off-flavor was a grassy smell, and for tofu hamburger patty, it was a soybean smell. For cow's milk, it was a dairy smell.

The state in which no "Added component" was added (Comparative Examples 1-1 to 1-6) was defined as Score 1 and was evaluated as a reference for a change when the sample was added. A score of 3 or higher was determined to be acceptable.

Score 1: No "Added component" added (a state where off-flavor in each food was detected).

Score 2: Off-flavor detected when no "Added component" was added was reduced to a certain extent, but still detected strongly.

Score 3: Off-flavor detected when no "Added component" was added was detected slightly, but reduced greatly.

Score 4: Off-flavor detected when no "Added component" was added was detected very slightly, but almost unnoticeable.

Score 5: Off-flavor detected when no "Added component" was added was not detected at all. That is, a state in which the masking effect was the strongest.

### On "Soap odor"

Since the action of the masking effect according to the present invention is by the free fatty acid, it was assumed that the masking agent itself would be detected as an off-flavor, and the "soap odor" was evaluated according to the following criteria. A state in which no "Added component" was added (Comparative Examples 1-1 to 1-6) was evaluated as Score 5. A score of 3 or higher was determined to be acceptable.

Score 1: Soap odor detected considerably strongly.

Score 2: Soap odor detected clearly.

Score 3: Soap odor detected slightly, but within an acceptable range.

Score 4: Soap odor detected very slightly, or hardly detected.

Score 5: No soap odor detected at all (equivalent to a state with no component added).

### On "Bitterness"

Since the action of the masking effect according to the present invention is by the free fatty acid, it was assumed that the taste of the masking agent itself would be detected, and the "bitterness" was evaluated according to the following criteria. A state in which no "Added component" was added (Comparative Examples 1-1 to 1-6) was evaluated as Score 5. That is, the bitterness of the evaluated food itself was not included in the evaluation.

A score of 3 or higher was determined to be acceptable.

Score 1: Bitterness detected considerably strongly.

Score 2: Bitterness detected clearly.

Score 3: Bitterness detected slightly, but within an acceptable range.

Score 4: Bitterness detected very slightly or hardly detected.

Score 5: No bitterness detected at all (equivalent to a state with no component added).

### On "Overall"

Based on the evaluations of the "off-flavor", "soap odor", and "bitterness", final acceptability/unacceptability determination was made.

Specifically, when either the soap odor or the bitterness was a score of 2 or lower, the overall evaluation was ×. Provided that both the soap odor and the bitterness were Score 3 or higher, the overall evaluation was: × when the "off-flavor" was Score 1; △ when the "off-flavor" was Score 2; ∘ when the "off-flavor" was Score 3; and ⊚ when the "off-flavor" was a score of 4 or higher. Evaluations of ∘ and ⊚ were determined to be acceptable results.

That is,
when a soap odor and bitterness were present, judgement was unconditionally ×, and in the other cases, judgement was made (× to ⊚) based on the off-flavor reduction effect. In other words, even when the off-flavor reduction effect was obtained, the cases where a soap odor or bitterness as a side effect was present were evaluated as ×.

### Discussion

Even when the predetermined fatty acid was added to each food in the form of a triglyceride, the effect of masking the off-flavor of each food was not observed.

On the other hand, no soap odor or bitterness was detected even when an excessive amount of the fatty acid was added.

### Study 2: Verification of effect of addition as emulsion

The effect when the "Added component" used in Study 1 was added in the form of emulsion was examined.

The amount added as an oil and/or fat to each food is listed in Table 2-1. The method of addition was the same as in Study 1.

The preparation method for the emulsion is indicated below.

Flavor evaluation was made in the same manner as in Study 1, and the results are also listed in Table 2-1.

**Table 2-1**

| | Added component | Amount added as lipid | Food to which the component was added | Off-flavor | Soap odor | Bitterness | Overall |
|---|---|---|---|---|---|---|---|
| Comparative Example 2-1 | Triglyceride emulsion | 10000 ppm | Soy milk | 2 | 5 | 5 | Δ |
| Comparative Example 2-2 | Triglyceride emulsion | 10000 ppm | Oat milk | 2 | 5 | 5 | Δ |
| Comparative Example 2-3 | Triglyceride emulsion | 10000 ppm | Vegetable juice | 2 | 5 | 5 | Δ |
| Comparative Example 2-4 | Triglyceride emulsion | 10000 ppm | Green juice (Aojiru) | 2 | 5 | 5 | Δ |
| Comparative Example 2-5 | Triglyceride emulsion | 10000 ppm | Meat-like hamburger patty | 2 | 5 | 5 | Δ |
| Comparative Example 2-6 | Triglyceride emulsion | 10000 ppm | Cow's milk | 2 | 5 | 5 | Δ |
| Comparative Example 2-7 | Triglyceride emulsion | 740 ppm | Soy milk | 1 | 5 | 5 | × |
| Comparative Example 2-8 | Triglyceride emulsion | 740 ppm | Oat milk | 1 | 5 | 5 | × |
| Comparative Example 2-9 | Triglyceride emulsion | 740 ppm | Vegetable juice | 1 | 5 | 5 | × |
| Comparative Example 2-10 | Triglyceride emulsion | 740 ppm | Green juice (Aojiru) | 1 | 5 | 5 | × |
| Comparative Example 2-11 | Triglyceride emulsion | 740 ppm | Meat-like hamburger patty | 1 | 5 | 5 | × |
| Comparative Example 2-12 | Triglyceride emulsion | 740 ppm | Cow's milk | 1 | 5 | 5 | × |
| Comparative Example 2-13 | Triglyceride emulsion | 50 ppm | Soy milk | 1 | 5 | 5 | × |
| Comparative Example 2-14 | Triglyceride emulsion | 50 ppm | Oat milk | 1 | 5 | 5 | × |
| Comparative Example 2-15 | Triglyceride emulsion | 5 ppm | Soy milk | 1 | 5 | 5 | × |
| Comparative Example 2-16 | Triglyceride emulsion | 5 ppm | Oat milk | 1 | 5 | 5 | × |
| Comparative Example 2-17 | Triglyceride emulsion | 1 ppm | Soy milk | 1 | 5 | 5 | × |
| Comparative Example 2-18 | Triglyceride emulsion | 1 ppm | Oat milk | 1 | 5 | 5 | × |
| Comparative Example 2-19 | Triglyceride emulsion | 0.5 ppm | Soy milk | 1 | 5 | 5 | × |
| Comparative Example 2-20 | Triglyceride emulsion | 0.5 ppm | Oat milk | 1 | 5 | 5 | × |

| | | | | | | | |
|---|---|---|---|---|---|---|---|
| - MCT64 was used as the triglyceride in the triglyceride emulsion. | | | | | | | |

### ∘ Preparation method of emulsion

One (1) part sucrose stearate was added to 79-part water, and the temperature was adjusted to 60°C. To this, twenty (20) parts of the predetermined triglyceride were added, the mixture was stirred at 5000 rpm for 10 minutes using HOMOGENIZING MIXER MARKII (model: MARK2.5; available from PRIMIX Corporation), and then homogenized at 10 MPa using a high-pressure homogenizer (model: APV1000, available from SMT Corporation), and an emulsion was prepared.

The sucrose stearate used was "Ryoto Sugar Ester S-1670, HLB: about 16" available from Mitsubishi Chemical Corporation.

### Discussion

- Even when the triglyceride made up of the predetermined fatty acid was added to each food in the form of an emulsion, the effect of masking the off-flavor in each food was not observed.

### Study 3: Verification of effect of each free fatty acid

The masking effect when a free fatty acid was added to each food was verified. The amount added is listed in Table 3-1.

Further, the flavor of each food was evaluated. The method was the same as in Study 1. The results are also presented in Table 3-1.

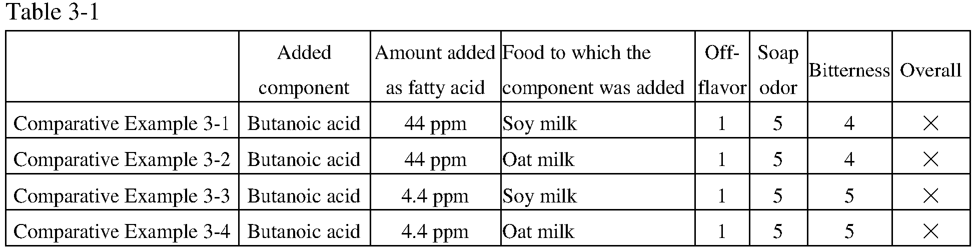

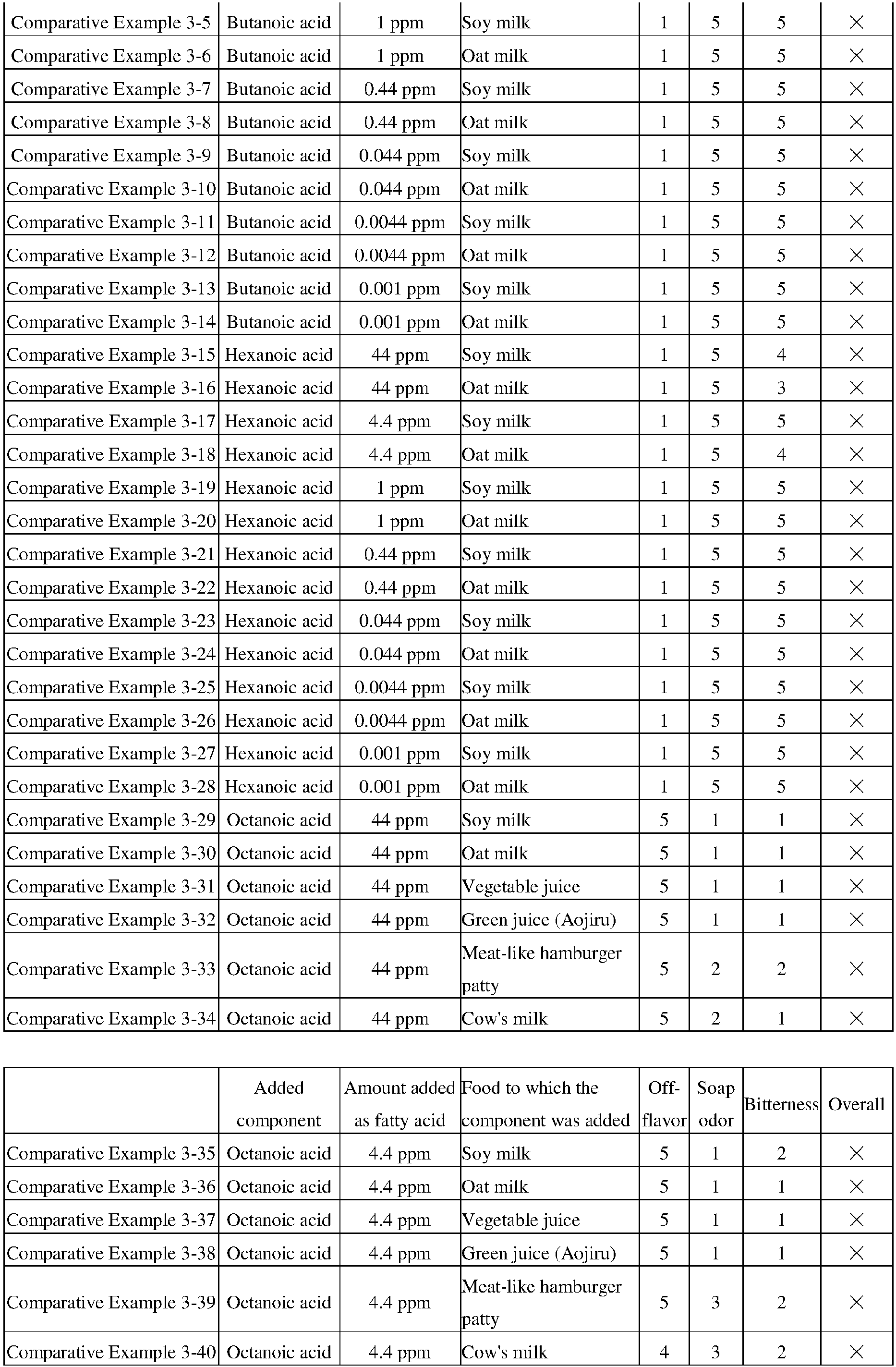

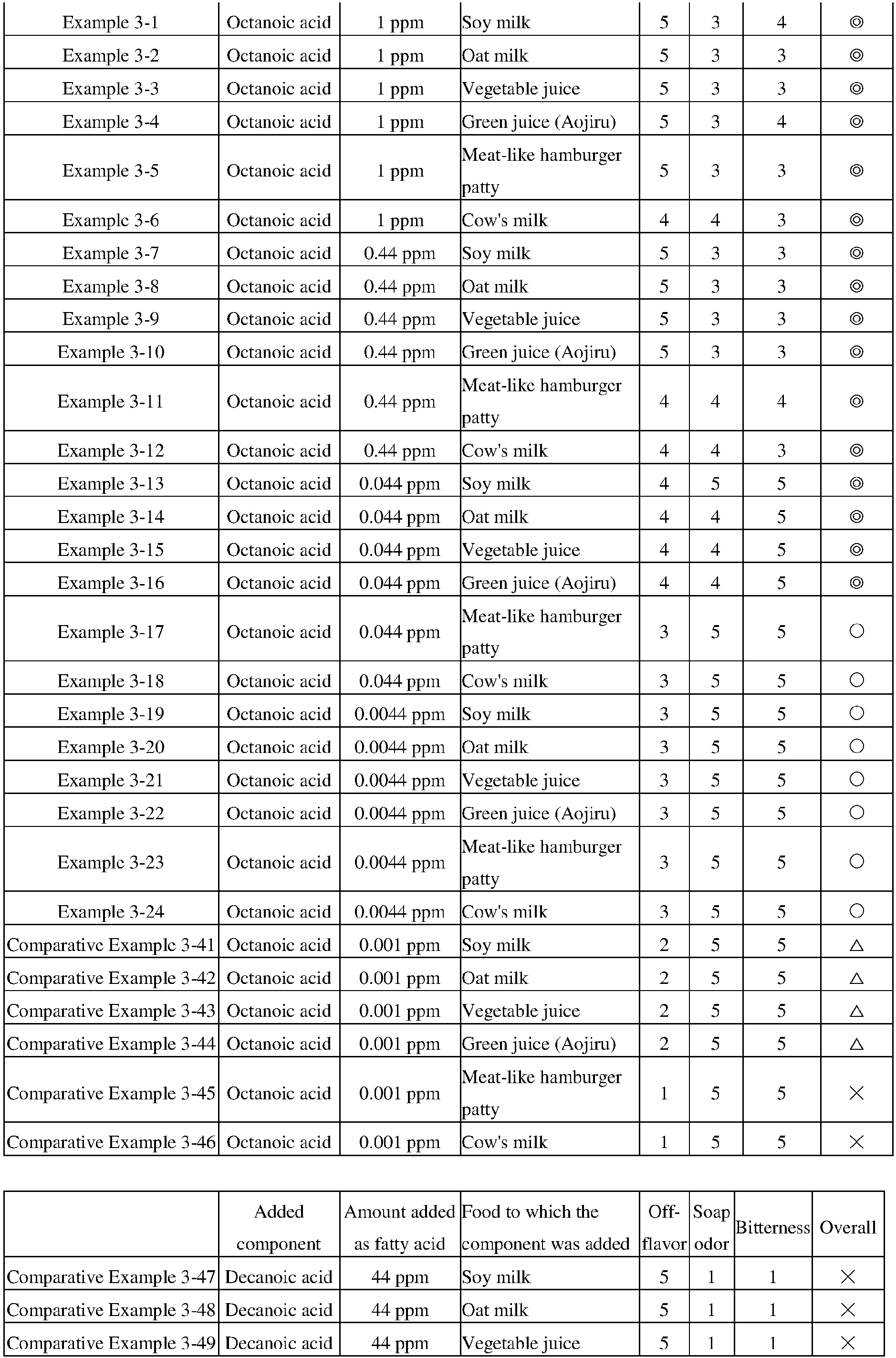

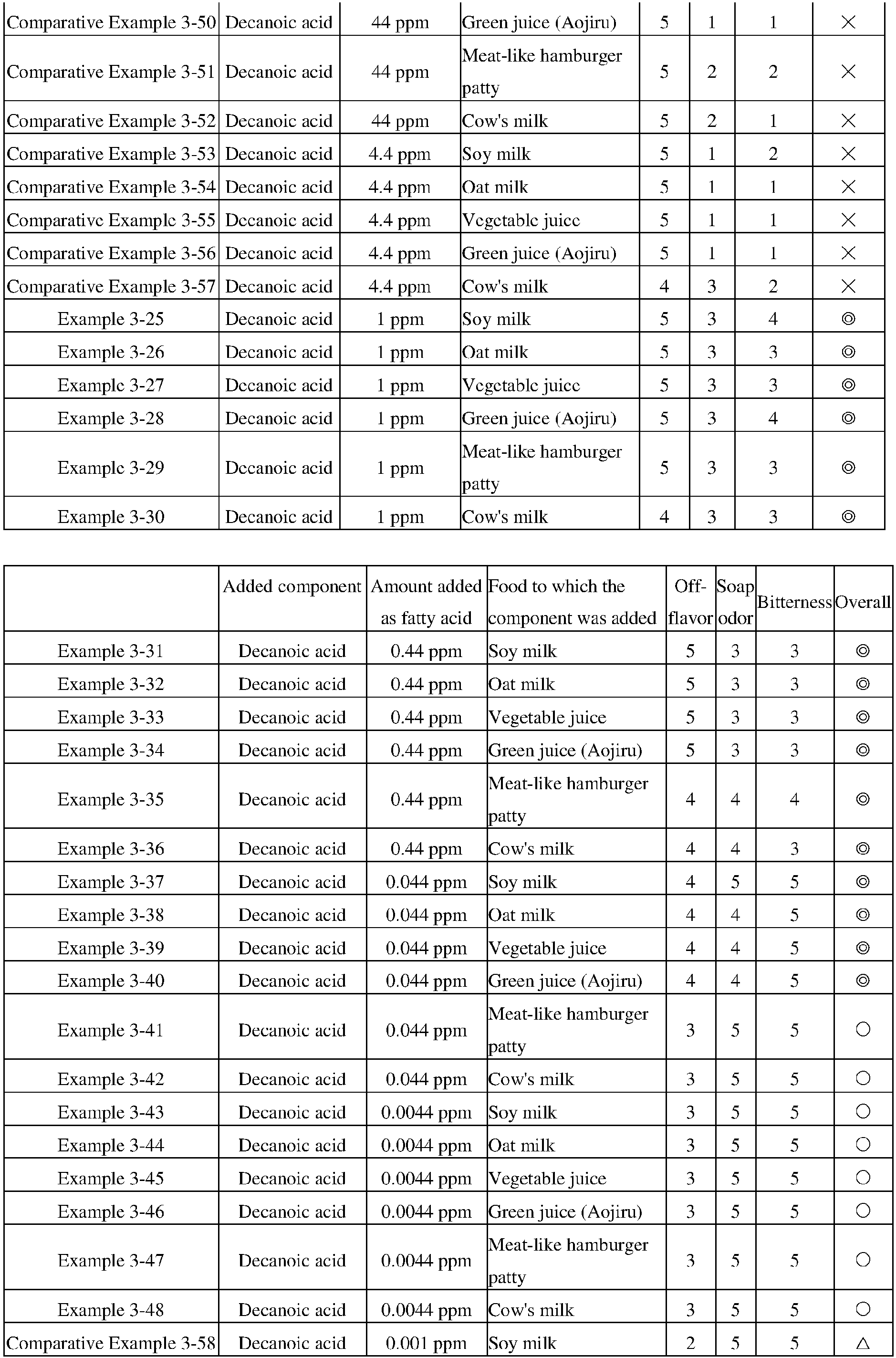

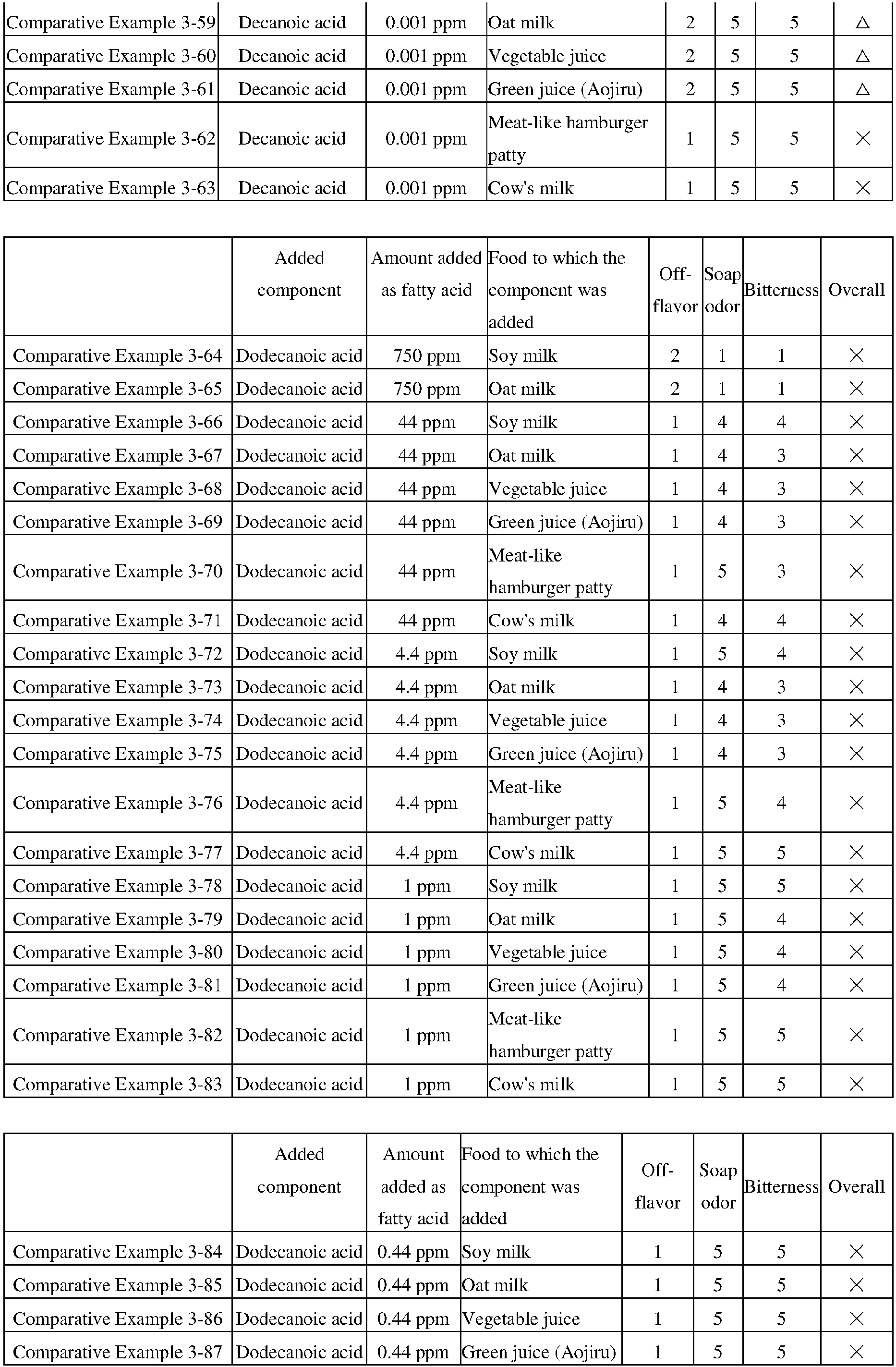

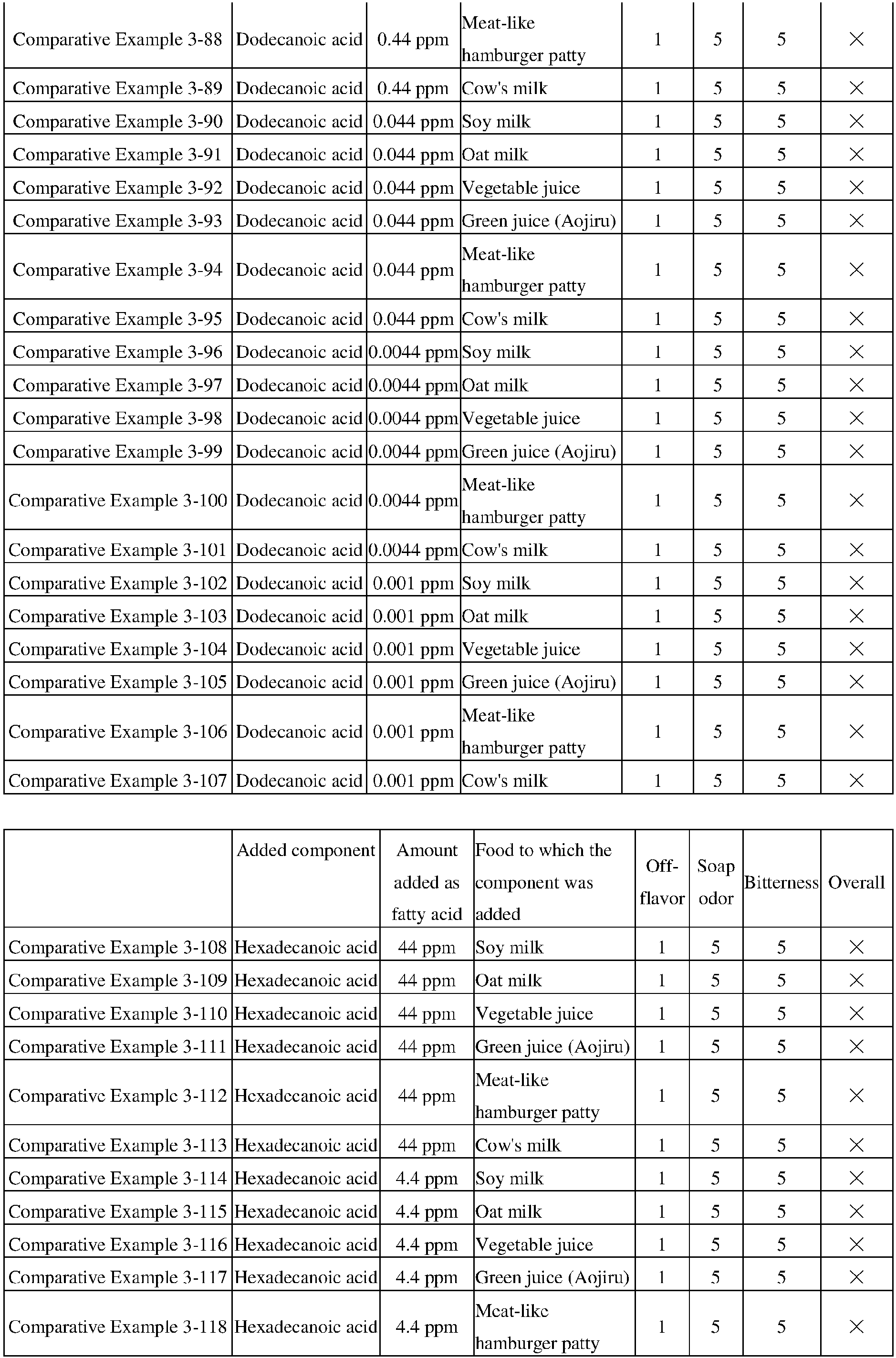

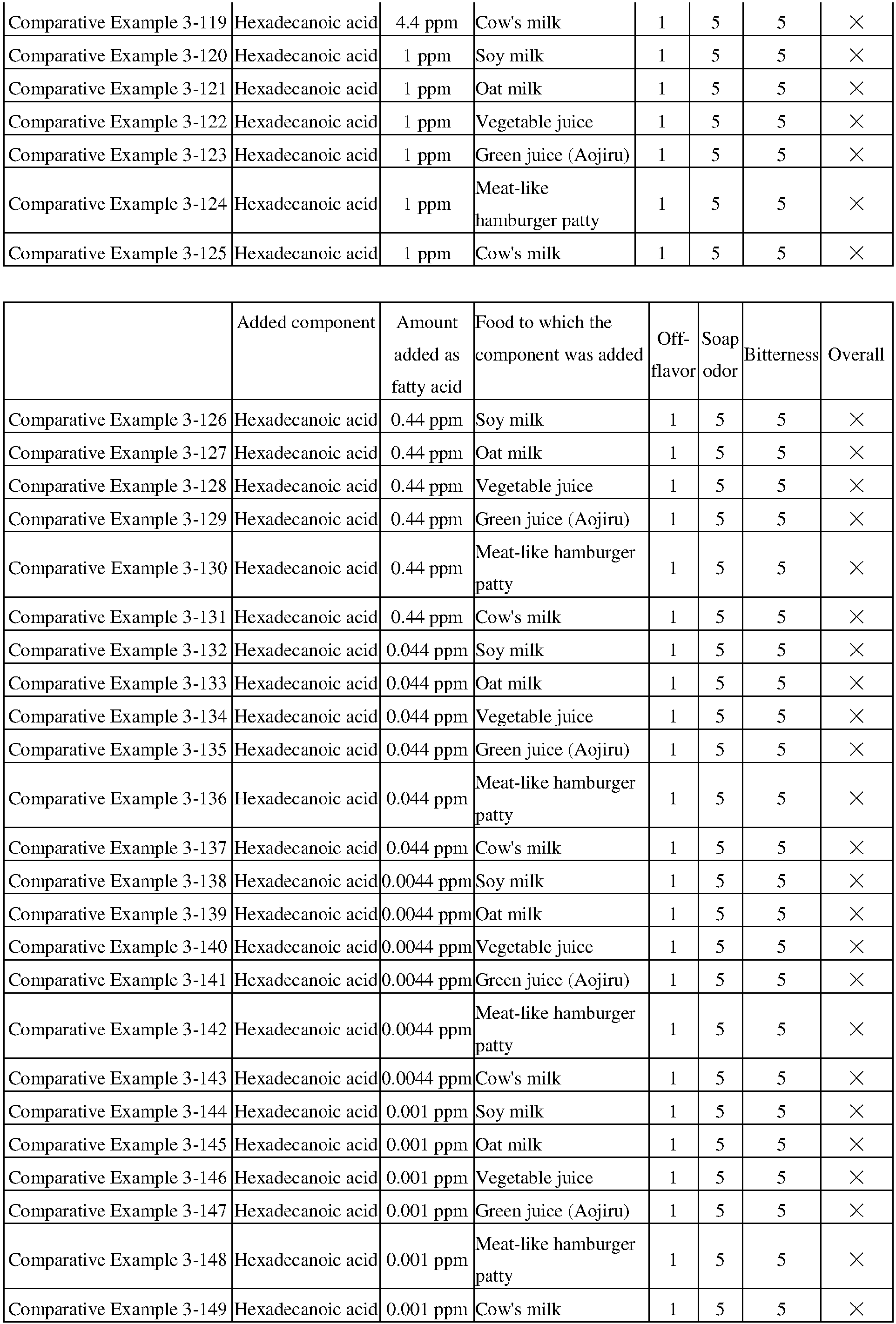

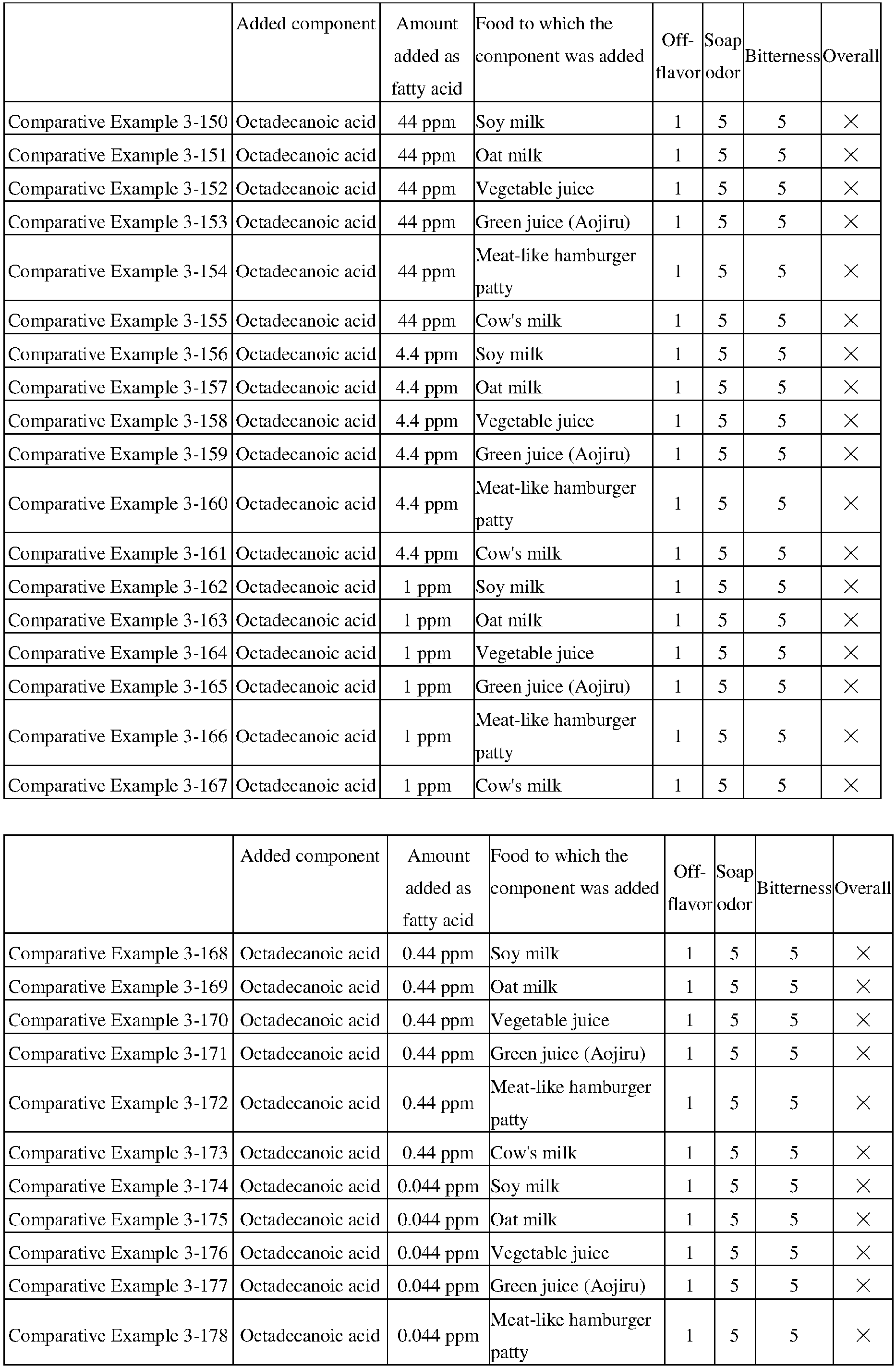

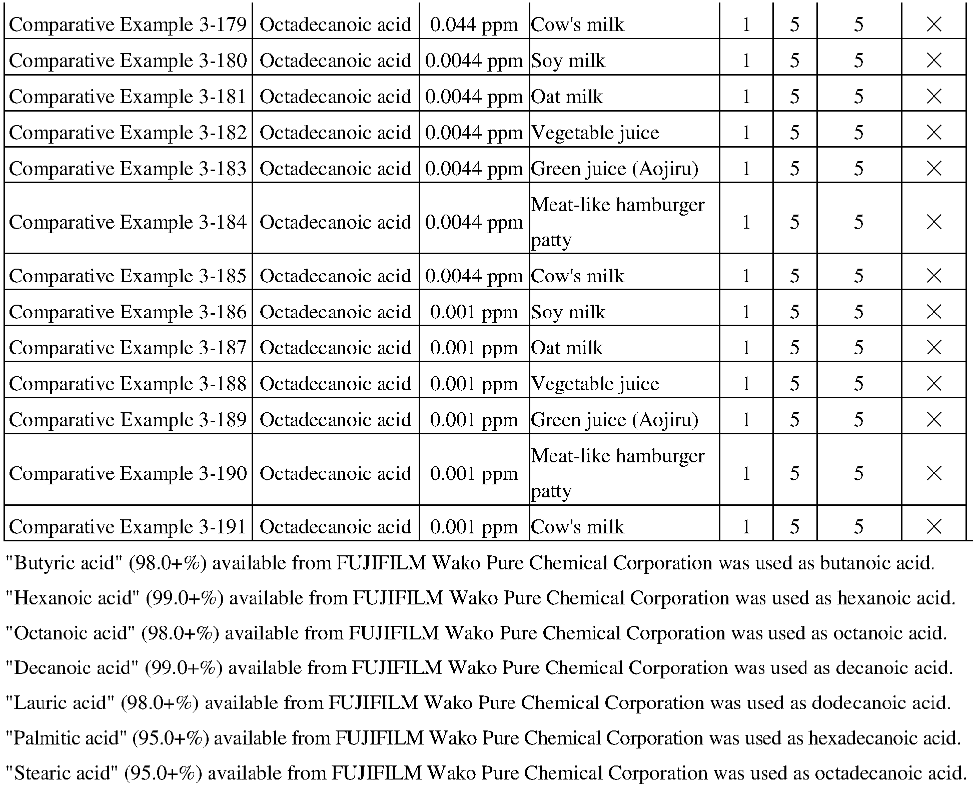

### Discussion

Even when butanoic acid was added in an amount of 44 ppm, almost no soap odor or bitterness was detected, but the effect of masking the off-flavor of each food was also not observed.

Further, even when hexanoic acid was added in an amount of 44 ppm, almost no soap odor or bitterness was detected, but the effect of masking the off-flavor of each food was also not observed.

When octanoic acid was added in a large amount, the masking effect was observed, but it had its own soap odor and bitterness, and thus was unacceptable. On the other hand, when octanoic acid was added in an appropriate amount, it had the masking effect of the off-flavor, no soap odor or bitterness was detected, and it was acceptable. When octanoic acid was added in a small amount, no effect was observed.

When decanoic acid was added in a large amount, the masking effect was observed, but it had its own soap odor and bitterness, and thus was unacceptable. On the other hand, when octanoic acid was added in an appropriate amount, it had the masking effect of the off-flavor, no soap odor or bitterness was detected, and it was acceptable. When octanoic acid was added in a small amount, no effect was observed.

Dodecanoic acid, hexadecanoic acid, and octadecanoic acid did not exhibit the masking effect of the off-flavor regardless of the amount added.

### Study 4: Verification of effect obtained by free fatty acid mixture

A mixture of free fatty acids was used to verify the masking effect in each amount added.

The formulation is listed in Table 4-1. The addition to each food and the flavor evaluation method were carried out in the same manner as in Study 1. The results are also presented in Table 4-1.

**Table 4-1**

| | Added component | Total amount added as free fatty acid | Food to which the component was added | Off-flavor | Soap odor | Bitterness | Overall |
|---|---|---|---|---|---|---|---|
| Comparative Example 4-1 | Mixture of octanoic acid and decanoic acid | 44 ppm | Soy milk | 5 | 1 | 1 | × |
| Comparative Example 4-2 | Mixture of octanoic acid and decanoic acid | 44 ppm | Oat milk | 5 | 1 | 1 | × |
| Comparative Example 4-3 | Mixture of octanoic acid and decanoic acid | 44 ppm | Vegetable juice | 5 | 1 | 1 | × |
| Comparative Example 4-4 | Mixture of octanoic acid and decanoic acid | 44 ppm | Green juice (Aojiru) | 5 | 1 | 1 | × |
| Comparative Example 4-5 | Mixture of octanoic acid and decanoic acid | 44 ppm | Meat-like hamburger patty | 5 | 2 | 2 | × |
| Comparative Example 4-6 | Mixture of octanoic acid and decanoic acid | 44 ppm | Cow's milk | 5 | 2 | 1 | × |
| Comparative Example 4-7 | Mixture of octanoic acid and decanoic acid | 4.4 ppm | Soy milk | 5 | 1 | 2 | × |
| Comparative Example 4-8 | Mixture of octanoic acid and decanoic acid | 4.4 ppm | Oat milk | 5 | 1 | 1 | × |
| Comparative Example 4-9 | Mixture of octanoic acid and decanoic acid | 4.4 ppm | Vegetable juice | 5 | 1 | 1 | × |
| Comparative Example 4-10 | Mixture of octanoic acid and decanoic acid | 4.4 ppm | Green juice (Aojiru) | 5 | 1 | 1 | × |
| Comparative Example 4-11 | Mixture of octanoic acid and decanoic acid | 4.4 ppm | Cow's milk | 4 | 3 | 2 | × |
| Example 4-1 | Mixture of octanoic acid and decanoic acid | 1 ppm | Soy milk | 5 | 3 | 4 | ⊚ |
| Example 4-2 | Mixture of octanoic acid and decanoic acid | 1 ppm | Oat milk | 5 | 4 | 3 | ⊚ |
| Example 4-3 | Mixture of octanoic acid and decanoic acid | 1 ppm | Vegetable juice | 5 | 3 | 3 | ⊚ |
| Example 4-4 | Mixture of octanoic acid and decanoic acid | 1 ppm | Green juice (Aojiru) | 5 | 3 | 4 | ⊚ |
| Example 4-5 | Mixture of octanoic acid and decanoic acid | 1 ppm | Meat-like hamburger patty | 5 | 4 | 4 | ⊚ |
| Example 4-6 | Mixture of octanoic acid and decanoic acid | 1 ppm | Cow's milk | 4 | 4 | 3 | ⊚ |
| Example 4-7 | Mixture of octanoic acid and decanoic acid | 0.44 ppm | Soy milk | 5 | 3 | 3 | ⊚ |
| Example 4-8 | Mixture of octanoic acid and decanoic acid | 0.44 ppm | Oat milk | 5 | 3 | 3 | ⊚ |
| Example 4-9 | Mixture of octanoic acid and decanoic acid | 0.44 ppm | Vegetable juice | 5 | 3 | 3 | ⊚ |
| Example 4-10 | Mixture of octanoic acid and decanoic acid | 0.44 ppm | Green juice (Aojiru) | 5 | 3 | 3 | ⊚ |
| Example 4-11 | Mixture of octanoic acid and decanoic acid | 0.44 ppm | Meat-like hamburger patty | 4 | 4 | 4 | ⊚ |
| Example 4-12 | Mixture of octanoic acid and decanoic acid | 0.44 ppm | Cow's milk | 4 | 4 | 3 | ⊚ |
| Example 4-13 | Mixture of octanoic acid and decanoic acid | 0.044 ppm | Soy milk | 4 | 5 | 5 | ⊚ |
| Example 4-14 | Mixture of octanoic acid and decanoic acid | 0.044 ppm | Oat milk | 4 | 4 | 5 | ⊚ |
| Example 4-15 | Mixture of octanoic acid and decanoic acid | 0.044 ppm | Vegetable juice | 4 | 4 | 5 | ⊚ |
| Example 4-16 | Mixture of octanoic acid and decanoic acid | 0.044 ppm | Green juice (Aojiru) | 4 | 4 | 5 | ⊚ |
| Example 4-17 | Mixture of octanoic acid and decanoic acid | 0.044 ppm | Meat-like hamburger patty | 3 | 5 | 5 | ○ |
| Example 4-18 | Mixture of octanoic acid and decanoic acid | 0.044 ppm | Cow's milk | 3 | 5 | 5 | ○ |
| Example 4-19 | Mixture of octanoic acid and decanoic acid | 0.0044 ppm | Soy milk | 3 | 5 | 5 | ○ |
| Example 4-20 | Mixture of octanoic acid and decanoic acid | 0.0044 ppm | Oat milk | 3 | 5 | 5 | ○ |
| Example 4-21 | Mixture of octanoic acid and decanoic acid | 0.0044 ppm | Vegetable juice | 3 | 5 | 5 | ○ |
| Example 4-22 | Mixture of octanoic acid and decanoic acid | 0.0044 ppm | Green juice (Aojiru) | 3 | 5 | 5 | ○ |
| Example 4-23 | Mixture of octanoic acid and decanoic acid | 0.0044 ppm | Meat-like hamburger patty | 3 | 5 | 5 | ○ |
| Example 4-24 | Mixture of octanoic acid and decanoic acid | 0.0044 ppm | Cow's milk | 3 | 5 | 5 | ○ |
| Comparative Example 4-12 | Mixture of octanoic acid and decanoic acid | 0.001 ppm | Soy milk | 2 | 5 | 5 | Δ |
| Comparative Example 4-13 | Mixture of octanoic acid and decanoic acid | 0.001 ppm | Oat milk | 2 | 5 | 5 | Δ |
| Comparative Example 4-14 | Mixture of octanoic acid and decanoic acid | 0.001 ppm | Vegetable juice | 2 | 5 | 5 | Δ |
| Comparative Example 4-15 | Mixture of octanoic acid and decanoic acid | 0.001 ppm | Green juice (Aojiru) | 2 | 5 | 5 | Δ |
| Comparative Example 4-16 | Mixture of octanoic acid and decanoic acid | 0.001 ppm | Meat-like hamburger patty | 1 | 5 | 5 | × |
| Comparative Example 4-17 | Mixture of octanoic acid and decanoic acid | 0.001 ppm | Cow's milk | 1 | 5 | 5 | × |
| Comparative Example 4-18 | Octadecenoic acid mixture | 44 ppm | Soy milk | 1 | 5 | 3 | × |
| Comparative Example 4-19 | Octadecenoic acid mixture | 44 ppm | Oat milk | 1 | 5 | 3 | × |
| Comparative Example 4-20 | Octadecenoic acid mixture | 44 ppm | Vegetable juice | 1 | 5 | 3 | × |
| Comparative Example 4-21 | Octadecenoic acid mixture | 44 ppm | Green juice (Aojiru) | 1 | 5 | 3 | × |
| Comparative Example 4-22 | Octadecenoic acid mixture | 44 ppm | Meat-like hamburger patty | 1 | 5 | 4 | × |
| Comparative Example 4-23 | Octadecenoic acid mixture | 44 ppm | Cow's milk | 1 | 5 | 4 | × |
| Comparative Example 4-24 | Octadecenoic acid mixture | 4.4 ppm | Soy milk | 1 | 5 | 4 | × |
| Comparative Example 4-25 | Octadecenoic acid mixture | 4.4 ppm | Oat milk | 1 | 5 | 4 | × |
| Comparative Example 4-26 | Octadecenoic acid mixture | 4.4 ppm | Vegetable juice | 1 | 5 | 4 | × |
| Comparative Example 4-27 | Octadecenoic acid mixture | 4.4 ppm | Green juice (Aojiru) | 1 | 5 | 4 | × |
| Comparative Example 4-28 | Octadecenoic acid mixture | 4.4 ppm | Meat-like hamburger patty | 1 | 5 | 5 | × |
| Comparative Example 4-29 | Octadecenoic acid mixture | 4.4 ppm | Cow's milk | 1 | 5 | 5 | × |
| Comparative Example 4-30 | Octadecenoic acid mixture | 1 ppm | Soy milk | 1 | 5 | 5 | × |
| Comparative Example 4-31 | Octadecenoic acid mixture | 1 ppm | Oat milk | 1 | 5 | 5 | × |
| Comparative Example 4-32 | Octadecenoic acid mixture | 1 ppm | Vegetable juice | 1 | 5 | 5 | × |
| Comparative Example 4-33 | Octadecenoic acid mixture | 1 ppm | Green juice (Aojiru) | 1 | 5 | 5 | × |
| Comparative Example 4-34 | Octadecenoic acid mixture | 1 ppm | Meat-like hamburger patty | 1 | 5 | 5 | × |
| Comparative Example 4-35 | Octadecenoic acid mixture | 1 ppm | Cow's milk | 1 | 5 | 5 | × |
| Comparative Example 4-36 | Octadecenoic acid mixture | 0.44 ppm | Soy milk | 1 | 5 | 5 | × |
| Comparative Example 4-37 | Octadecenoic acid mixture | 0.44 ppm | Oat milk | 1 | 5 | 5 | × |
| Comparative Example 4-38 | Octadecenoic acid mixture | 0.44 ppm | Vegetable juice | 1 | 5 | 5 | × |
| Comparative Example 4-39 | Octadecenoic acid mixture | 0.44 ppm | Green juice (Aojiru) | 1 | 5 | 5 | × |
| Comparative Example 4-40 | Octadecenoic acid mixture | 0.44 ppm | Meat-like hamburger patty | 1 | 5 | 5 | × |
| Comparative Example 4-41 | Octadecenoic acid mixture | 0.44 ppm | Cow's milk | 1 | 5 | 5 | × |
| Comparative Example 4-42 | Octadecenoic acid mixture | 0.044 ppm | Soy milk | 1 | 5 | 5 | × |
| Comparative Example 4-43 | Octadecenoic acid mixture | 0.044 ppm | Oat milk | 1 | 5 | 5 | × |
| Comparative Example 4-44 | Octadecenoic acid mixture | 0.044 ppm | Vegetable juice | 1 | 5 | 5 | × |
| Comparative Example 4-45 | Octadecenoic acid mixture | 0.044 ppm | Green juice (Aojiru) | 1 | 5 | 5 | × |
| Comparative Example 4-46 | Octadecenoic acid mixture | 0.044 ppm | Meat-like hamburger patty | 1 | 5 | 5 | × |
| Comparative Example 4-47 | Octadecenoic acid mixture | 0.044 ppm | Cow's milk | 1 | 5 | 5 | × |
| Comparative Example 4-48 | Octadecenoic acid mixture | 0.0044 ppm | Soy milk | 1 | 5 | 5 | × |
| Comparative Example 4-49 | Octadecenoic acid mixture | 0.0044 ppm | Oat milk | 1 | 5 | 5 | × |
| Comparative Example 4-50 | Octadecenoic acid mixture | 0.0044 ppm | Vegetable juice | 1 | 5 | 5 | × |
| Comparative Example 4-51 | Octadecenoic acid mixture | 0.0044 ppm | Green juice (Aojiru) | 1 | 5 | 5 | × |
| Comparative Example 4-52 | Octadecenoic acid mixture | 0.0044 ppm | Meat-like hamburger patty | 1 | 5 | 5 | × |
| Comparative Example 4-53 | Octadecenoic acid mixture | 0.0044 ppm | Cow's milk | 1 | 5 | 5 | × |
| Comparative Example 4-54 | Octadecenoic acid mixture | 0.001 ppm | Soy milk | 1 | 5 | 5 | × |
| Comparative Example 4-55 | Octadecenoic acid mixture | 0.001 ppm | Oat milk | 1 | 5 | 5 | × |
| Comparative Example 4-56 | Octadecenoic acid mixture | 0.001 ppm | Vegetable juice | 1 | 5 | 5 | × |
| Comparative Example 4-57 | Octadecenoic acid mixture | 0.001 ppm | Green juice (Aojiru) | 1 | 5 | 5 | × |
| Comparative Example 4-58 | Octadecenoic acid mixture | 0.001 ppm | Meat-like hamburger patty | 1 | 5 | 5 | × |
| Comparative Example 4-59 | Octadecenoic acid mixture | 0.001 ppm | Cow's milk | 1 | 5 | 5 | × |

| | | | | | | | |
|---|---|---|---|---|---|---|---|
| The mixture of octanoic acid and decanoic acid was prepared by hydrolyzing MCT64 with a lipase. 53.0 wt.% of free octanoic acid, 35.4 wt.% of free decanoic acid, 2.1 wt.% of monoglycerides, 4.3 wt.% of diglycerides, and 5.2% of triglycerides were contained. - "LUNAC O-V" available from Kao Corporation was used as the octadecenoic acid mixture. 1.2 wt.% of dodecanoic acid, 0.5 wt.% of tetradecanoic acid, 4.5 wt.% of hexadecanoic acid, 2.2 wt.% of octadecanoic acid, 89.5 wt.% in total of octadecenoic acid and octadecadienoic acid, and 0.3 wt.% of eicosanoic acid were contained. | | | | | | | |

### Discussion

In the case of the mixture of octanoic acid and decanoic acid, when the mixture was added in an excessively large amount, a soap odor and bitterness were detected, and it was unacceptable. However, when the mixture was added in a predetermined amount, those were not detected, and only the masking effect was observed. When the mixture was added in an excessively small amount, the masking effect was not observed.

The octadecenoic acid mixture is a mixture of fatty acids having no masking effect even as a single fatty acid, but the masking effect was not observed regardless of the amount thereof.

### Study 5: Verification of effect obtained by fatty acid salt

According to Table 5-1, a fatty acid salt was added to various foods to verify the masking effect.

The addition method and evaluation method were the same as those in Study 1. The results are also presented in Table 5-1.

**Table 5-1**

| | Added component | Amount added as fatty acid | Food to which the component was added | Off-flavor | Soap odor | Bitterness | Overall |
|---|---|---|---|---|---|---|---|
| Comparative Example 5-1 | Sodium octanoate | 44 ppm | Soy milk | 5 | 1 | 1 | × |
| Comparative Example 5-2 | Sodium octanoate | 44 ppm | Oat milk | 5 | 1 | 1 | × |
| Comparative Example 5-3 | Sodium octanoate | 44 ppm | Vegetable juice | 5 | 1 | 1 | × |
| Comparative Example 5-4 | Sodium octanoate | 44 ppm | Green juice (Aojiru) | 5 | 1 | 1 | × |
| Comparative Example 5-5 | Sodium octanoate | 44 ppm | Meat-like hamburger patty | 5 | 2 | 2 | × |
| Comparative Example 5-6 | Sodium octanoate | 44 ppm | Cow's milk | 5 | 2 | 1 | × |
| Comparative Example 5-7 | Sodium octanoate | 4.4 ppm | Soy milk | 5 | 1 | 2 | × |
| Comparative Example 5-8 | Sodium octanoate | 4.4 ppm | Oat milk | 5 | 1 | 1 | × |
| Comparative Example 5-9 | Sodium octanoate | 4.4 ppm | Vegetable juice | 5 | 1 | 1 | × |
| Comparative Example 5-10 | Sodium octanoate | 4.4 ppm | Green juice (Aojiru) | 5 | 1 | 1 | × |
| Comparative Example 5-11 | Sodium octanoate | 4.4 ppm | Cow's milk | 4 | 3 | 2 | × |
| Example 5-1 | Sodium octanoate | 1 ppm | Soy milk | 5 | 3 | 3 | ⊚ |
| Example 5-2 | Sodium octanoate | 1 ppm | Oat milk | 5 | 3 | 3 | ⊚ |
| Example 5-3 | Sodium octanoate | 1 ppm | Vegetable juice | 5 | 3 | 3 | ⊚ |
| Example 5-4 | Sodium octanoate | 1 ppm | Green juice (Aojiru) | 5 | 3 | 3 | ⊚ |
| Example 5-5 | Sodium octanoate | 1 ppm | Meat-like hamburger patty | 5 | 4 | 4 | ⊚ |
| Example 5-6 | Sodium octanoate | 1 ppm | Cow's milk | 4 | 4 | 3 | ⊚ |
| | | | | | | | |

| | Added component | Amount added as fatty acid | Food to which the component was added | Off-flavor | Soap odor | Bitterness | Overall |
|---|---|---|---|---|---|---|---|
| Example 5-7 | Sodium octanoate | 0.44 ppm | Soy milk | 5 | 3 | 3 | ⊚ |
| Example 5-8 | Sodium octanoate | 0.44 ppm | Oat milk | 5 | 3 | 3 | ⊚ |
| Example 5-9 | Sodium octanoate | 0.44 ppm | Vegetable juice | 5 | 3 | 3 | ⊚ |
| Example 5-10 | Sodium octanoate | 0.44 ppm | Green juice (Aojiru) | 5 | 3 | 3 | ⊚ |
| Example 5-11 | Sodium octanoate | 0.44 ppm | Meat-like hamburger patty | 4 | 4 | 4 | ⊚ |
| Example 5-12 | Sodium octanoate | 0.44 ppm | Cow's milk | 4 | 4 | 3 | ⊚ |
| Example 5-13 | Sodium octanoate | 0.044 ppm | Soy milk | 4 | 5 | 5 | ⊚ |
| Example 5-14 | Sodium octanoate | 0.044 ppm | Oat milk | 4 | 4 | 5 | ⊚ |
| Example 5-15 | Sodium octanoate | 0.044 ppm | Vegetable juice | 4 | 4 | 5 | ⊚ |
| Example 5-16 | Sodium octanoate | 0.044 ppm | Green juice (Aojiru) | 4 | 4 | 5 | ⊚ |
| Example 5-17 | Sodium octanoate | 0.044 ppm | Meat-like hamburger patty | 3 | 5 | 5 | ○ |
| Example 5-18 | Sodium octanoate | 0.044 ppm | Cow's milk | 3 | 5 | 5 | ○ |
| Example 5-19 | Sodium octanoate | 0.0044 ppm | Soy milk | 3 | 5 | 5 | ○ |
| Example 5-20 | Sodium octanoate | 0.0044 ppm | Oat milk | 3 | 5 | 5 | ○ |
| Example 5-21 | Sodium octanoate | 0.0044 ppm | Vegetable juice | 3 | 5 | 5 | ○ |
| Example 5-22 | Sodium octanoate | 0.0044 ppm | Green juice (Aojiru) | 3 | 5 | 5 | ○ |
| Example 5-23 | Sodium octanoate | 0.0044 ppm | Meat-like hamburger patty | 3 | 5 | 5 | ○ |
| Example 5-24 | Sodium octanoate | 0.0044 ppm | Cow's milk | 3 | 5 | 5 | ○ |
| Comparative Example 5-12 | Sodium octanoate | 0.001 ppm | Soy milk | 2 | 5 | 5 | △ |
| Comparative Example 5-13 | Sodium octanoate | 0.001 ppm | Oat milk | 2 | 5 | 5 | △ |
| Comparative Example 5-14 | Sodium octanoate | 0.001 ppm | Vegetable juice | 2 | 5 | 5 | △ |
| Comparative Example 5-15 | Sodium octanoate | 0.001 ppm | Green juice (Aojiru) | 2 | 5 | 5 | △ |
| Comparative Example 5-16 | Sodium octanoate | 0.001 ppm | Meat-like hamburger patty | 1 | 5 | 5 | × |
| Comparative Example 5-17 | Sodium octanoate | 0.001 ppm | Cow's milk | 1 | 5 | 5 | × |

| | | | | | | | |
|---|---|---|---|---|---|---|---|
| - "Sodium octanoate" (97.0+%) available from FUJIFILM Wako Pure Chemical Corporation was used as sodium octanoate. | | | | | | | |

### Discussion

- It was confirmed that even when the "Added component" was added in the form of a fatty acid salt, the masking effect was exhibited due to the presence of the predetermined amount of the predetermined fatty acid as the free fatty acid.

### Study 6: Preparation of masking agent and effect thereof

A "masking agent" containing octanoic acid was prepared, and its effect was confirmed.

The formulation of the masking agent is listed in Table 6-1. A preparation method for the masking agent is described in "∘ Preparation method for masking agent".

The aspect of addition of each masking agent to each food is listed in Table 6-2. In addition, the results of the sensory evaluation are also listed.

The method of addition to each food and the sensory evaluation method were conducted in accordance with Study 1.

**Table 6-1**

| | Example 6-1 | Example 6-2 |
|---|---|---|
| | Octanoic acid formulation 1 | Octanoic acid formulation 2 |
| Octanoic acid | 1 | 1 |
| Glycerin | 99 | - |
| Sucrose | - | 70 |
| Water | - | 29 |
| Total | 100 | 100 |

### (Unit of Formulation: mass%)

For sucrose, a reagent available from FUJIFILM Wako Pure Chemical Corporation was used.

### ∘ Preparation method for masking agent

1. The raw materials were mixed according to the formulation.
2 The mixture was stirred using a homomixer at 60°C and 10000 RPM for 30 minutes.

**Table 6-2**

| | Added component | Amount added as fatty acid | Added to: | Off-flavor | Soap odor | Bitterness | Overall |
|---|---|---|---|---|---|---|---|
| Comparative Example 6-1 | Octanoic acid formulation 1 | 44 ppm | Soy milk | 5 | 1 | 1 | × |
| Comparative Example 6-2 | Octanoic acid formulation 1 | 44 ppm | Oat milk | 5 | 1 | 1 | × |
| Comparative Example 6-3 | Octanoic acid formulation 1 | 4.4 ppm | Soy milk | 5 | 1 | 2 | × |
| Comparative Example 6-4 | Octanoic acid formulation 1 | 4.4 ppm | Oat milk | 5 | 1 | 1 | × |
| Example 6-3 | Octanoic acid formulation 1 | 1 ppm | Soy milk | 5 | 3 | 4 | ⊚ |
| Example 6-4 | Octanoic acid formulation 1 | 1 ppm | Oat milk | 5 | 3 | 3 | ⊚ |
| Example 6-5 | Octanoic acid formulation 1 | 0.44 ppm | Soy milk | 5 | 3 | 3 | ⊚ |
| Example 6-6 | Octanoic acid formulation 1 | 0.44 ppm | Oat milk | 5 | 3 | 3 | ⊚ |
| Example 6-7 | Octanoic acid formulation 1 | 0.044 ppm | Soy milk | 4 | 5 | 5 | ⊚ |
| Example 6-8 | Octanoic acid formulation 1 | 0.044 ppm | Oat milk | 4 | 4 | 5 | ⊚ |
| Example 6-9 | Octanoic acid formulation 1 | 0.0044 ppm | Soy milk | 3 | 5 | 5 | ○ |
| Example 6-10 | Octanoic acid formulation 1 | 0.0044 ppm | Oat milk | 3 | 5 | 5 | ○ |
| Comparative Example 6-5 | Octanoic acid formulation 1 | 0.001 ppm | Soy milk | 2 | 5 | 5 | △ |
| Comparative Example 6-6 | Octanoic acid formulation 1 | 0.001 ppm | Oat milk | 2 | 5 | 5 | △ |
| | | | | | | | |

| | Added component | Amount added as fatty acid | Added to: | Off-flavor | Soap odor | Bitterness | Overall |
|---|---|---|---|---|---|---|---|
| Comparative Example 6-7 | Octanoic acid formulation 2 | 44 ppm | Soy milk | 5 | 1 | 1 | × |
| Comparative Example 6-8 | Octanoic acid formulation 2 | 44 ppm | Oat milk | 5 | 1 | 1 | × |
| Comparative Example 6-9 | Octanoic acid formulation 2 | 4.4 ppm | Soy milk | 5 | 1 | 2 | × |
| Comparative Example 6-10 | Octanoic acid formulation 2 | 4.4 ppm | Oat milk | 5 | 1 | 1 | × |
| Example 6-11 | Octanoic acid formulation 2 | 1 ppm | Soy milk | 5 | 3 | 4 | ⊚ |
| Example 6-12 | Octanoic acid formulation 2 | 1 ppm | Oat milk | 5 | 3 | 3 | ⊚ |
| Example 6-13 | Octanoic acid formulation 2 | 0.44 ppm | Soy milk | 5 | 3 | 3 | ⊚ |
| Example 6-14 | Octanoic acid formulation 2 | 0.44 ppm | Oat milk | 5 | 3 | 3 | ⊚ |
| Example 6-15 | Octanoic acid formulation 2 | 0.044 ppm | Soy milk | 4 | 5 | 5 | ⊚ |
| Example 6-16 | Octanoic acid formulation 2 | 0.044 ppm | Oat milk | 4 | 4 | 5 | ⊚ |
| Example 6-17 | Octanoic acid formulation 2 | 0.0044 ppm | Soy milk | 3 | 5 | 5 | ○ |
| Example 6-18 | Octanoic acid formulation 2 | 0.0044 ppm | Oat milk | 3 | 5 | 5 | ○ |
| Comparative Example 6-11 | Octanoic acid formulation 2 | 0.001 ppm | Soy milk | 2 | 5 | 5 | △ |
| Comparative Example 6-12 | Octanoic acid formulation 2 | 0.001 ppm | Oat milk | 2 | 5 | 5 | △ |

### Discussion

In Example 6-1 and Example 6-2, masking agents containing octanoic acid were prepared, and it was confirmed that both masking agents exhibited the masking effect when used in the predetermined amount.

## Claims

1. A masking agent for a moisture-containing food, the masking agent comprising one or more selected from, as free fatty acids, octanoic acid, decanoic acid, a salt of octanoic acid, and a salt of decanoic acid in an amount that is from 1 to 100000 ppm in total as free fatty acids.

2. The masking agent according to claim 1, wherein the moisture-containing food comprises a plant-derived raw material, and the masking agent masks an off-flavor derived from the plant-derived raw material.

3. A method for masking an off-flavor in a moisture-containing food, the method comprising incorporating into the moisture-containing food one or more selected from, as free fatty acids, octanoic acid, decanoic acid, a salt of octanoic acid, and a salt of decanoic acid in an amount that is from 0.002 to 3 ppm in total as free fatty acids.

4. The method for masking an off-flavor according to claim 3, wherein the moisture-containing food comprises a plant-derived raw material, and the method is for masking an off-flavor derived from the plant-derived raw material.

5. A moisture-containing food in which an off-flavor is masked, the moisture-containing food comprising one or more selected from, as free fatty acids, octanoic acid, decanoic acid, a salt of octanoic acid, and a salt of decanoic acid in an amount that is from 0.002 to 3 ppm in total as free fatty acids.

6. A method for producing a moisture-containing food in which an off-flavor is masked, the method comprising, in production of the food, adding one or more selected from, as free fatty acids, octanoic acid, decanoic acid, a salt of octanoic acid, and a salt of decanoic acid in such an amount that is from 0.002 to 3 ppm in total as free fatty acids.

7. A method for producing a masking agent, the method comprising the following steps of:
1. adding to an aqueous solvent one or more selected from, as free fatty acids, octanoic acid, decanoic acid, a salt of octanoic acid, and a salt of decanoic acid such that a final content thereof in the agent is from 1 to 100000 ppm in total as free fatty acids; and
2. homogenizing.
